Europäisches Patentamt

European Patent Office

Office européen des brevets

(19)

(11) Veröffentlichungsnummer : **0 288 603 B1**

(12) # EUROPÄISCHE PATENTSCHRIFT

(45) Veröffentlichungstag der Patentschrift :
05.06.91 Patentblatt 91/23

(51) Int. Cl.$^5$ : **A23N 1/02**, B30B 9/06

(21) Anmeldenummer : 87117057.7

(22) Anmeldetag : 19.11.87

(54) **Verfahren und Vorrichtung zur Herstellung von Presssaft aus Pflanzen.**

(30) Priorität : 04.04.87 DE 3711453

(43) Veröffentlichungstag der Anmeldung :
02.11.88 Patentblatt 88/44

(45) Bekanntmachung des Hinweises auf die
Patenterteilung :
05.06.91 Patentblatt 91/23

(84) Benannte Vertragsstaaten :
AT BE CH DE FR GB IT LI LU NL SE

(56) Entgegenhaltungen :
DE-A- 2 606 987
DE-A- 3 035 877
DE-A- 3 432 774
US-A- 1 545 818

(73) Patentinhaber : ABNOBA HEILMITTEL GMBH
Güterstrasse 53
W-7530 Pforzheim (DE)

(72) Erfinder : Feles, Michael
In den Steingruben 29
W-7532 Niefern-Öschelbronn 1 (DE)
Erfinder : Koehler, Reinhard, Dr.
Obere Bachgasse 70
W-7532 Niefern-Öschelbronn 2 (DE)
Erfinder : Scheffler, Armin, Dr.
Forststrasse 7
W-7532 Niefern-Öschelbronn 2 (DE)

(74) Vertreter : Buchner, Otto, Dr. et al
Patentanwälte Dipl.-Ing. Klaus Westphal Dr.
rer. nat. Bernd Mussgnug Dr. rer. nat. Otto
Buchner Flossmannstrasse 30a
W-8000 München 60 (DE)

**Beschreibung**

Die Erfindung betrifft ein Verfahren zur Herstellung von Preßsaft aus Pflanzen nach dem Oberbegriff des Anspruchs 1 sowie eine Vorrichtung zur Durchführung dieses Verfahrens.

Ein derartiges Verfahren ist aus der DE 26 06 987 AI bekannt. Bei dem bekannten Verfahren wird in einem ersten Preßvorgang ein großer Teil des zu gewinnenden Pflanzensaftes ausgepreßt, während der Preßrückstand vor weiteren anschließenden Preßvorgängen jeweils mit Wasser und dem aus nachfolgenden Preßvorgängen zurückgeführten restlichen Preßsaft versetzt und nochmals gepreßt wird. Ein Durchtritt des Preßrückstandes durch das Trennmittel, z.B. einen Spalt oder ein Filter, ist bei dem bekannten Verfahren nicht vorgesehen.

Um den Preßvorgang zu erleichtern, wird bei vielen bekannten Verfahren dieser Art das auszupressende Pflanzenmaterial durch rotierende Messer oder dergleichen mechanisch zerkleinert und erst anschließend ausgepreßt, insbesondere, wenn es sich um festeres Pflanzenmaterial handelt. Das Zerkleinern geschieht meist stufenweise, wobei das Pflanzenmaterial beim Vorzerkleinern mit Luft oder Schutzgas in Berührung kommt. Während des Feinmahlens wird das Pflanzenmaterial erwärmt, so daß die Mühle oft stark gekühlt werden muß.

Durch die Erfindung soll ein Verfahren der eingangs genannten Art geschaffen werden, bei dem auch festeres Pflanzenmaterial schonend und möglichst ohne chemische Beeinträchtigungen sowie bei hoher Ausbeute ausgepreßt werden kann.

Diese Aufgabe wird erfindungsgemäß durch die kennzeichnenden Merkmale des Anspruchs 1 gelöst.

Die Art der verwendeten Flüssigkeit wird natürlich so bestimmt, daß der erzielte Preßsaft dadurch chemisch nicht beeinträchtigt wird. Grundsätzlich ist jede Flüssigkeit geeignet, die diese Forderung erfüllt.

Durch das erfindungsgemäße Verfahren können Pflanzen ohne vorhergehende mechanische Zerkleinerung durch Messer oder dgl. einerseits weitgehend aufgeschlossen, andererseits bis zu einem hohen Ausbeutegrad verwertet werden. Die Verkleinerung des Spaltes führt zu einer Aufschließung des Extraktes bis in den Bereich von Zellorganellen.

Besonders zweckmäßig läßt sich das erfindungsgemäße Verfahren auf das Auspressen von Mistel (Viscum album L.) anwenden, wobei jede Oxydation des Extraktes vermieden und die oberflächenaktiven Bestandteile der Mistel geschützt werden. Die Aufschließung des Pflanzenmaterials in einem geschlossenen Flüssigkeitsvolumen ohne Restgas ermöglicht insbesondere die Aufarbeitung von Pflanzen mit oberflächen- oder oxidationsempfindlichen Substanzen. Dabei wird das Verfahren zweckmäßigerweise mit einer Spaltbreite von etwa 1/4 mm begonnen und bis zu einer schrittweise verkleinerten Spaltbreite von wenigen µm fortgeführt.

Zweckmäßig ist auch das Abpressen nach dem letzten Preßvorgang direkt über Mikrofilter mit einer Siebweite von etwa 0,22 µm, so daß eine sterile Lösung entsteht. Nach dem Abpressen wird der Preßkuchen mit Verdünnungsmittel gewaschen und anschließend mit Druckgas fast trockengedrückt. Als Druckgas wird vorzugsweise Argon oder Stickstoff verwendet.

Die Extraktausbeute ist beim erfindungsgemäßen Verfahren außerordentlich hoch und kann im Falle der Mistel 70 bis 80 Gew.-%, bezogen auf die frischen Pflanzen, noch übersteigen. Während, wie erwähnt, grundsätzlich jede mit dem gewünschten chemischen Ergebnis verträgliche Flüssigkeit bei dem Verfahren verwendet werden kann, wird bevorzugt eine an sich bekannte Pufferlösung verwendet, die einerseits ein geeigneter Lösungsvermittler für den Pflanzenextrakt ist und andererseits dem Milieu des menschlichen Flüssigkeitshaushalts mit einem pH-Wert von etwa 7,35 und einer osmotischen Konzentration von etwa 290 mOsm entspricht. Dadurch ergibt sich der Vorteil, daß der späteren Verwendung des Preßsaftes als Heilmittel bereits während des Preßvorgangs vorgearbeitet wird.

In weiterer Ausgestaltung der Erfindung kann der Pufferlösung oder dem Preßgut noch ein Metallsalz in flüssiger Lösung mit einem Reduktionsmittel beigefügt werden, wodurch gewährleistet wird, daß das Metall des Metallsalzes innerhalb des Pflanzenextraktes sozusagen in statu nascendi elementar ausfällt. Dieses Metall dient zur Kolloidstabilisierung des Verfahrensproduktes. Das Reduktionsmittel kann von vornherein der Pufferlösung beigefügt werden. Die frische Entstehung des elementaren Metalls in kollidaler Form innerhalb des Pflanzenextraktes ist insbesondere vorteilhaft zur Verhinderung von chemisch-physikalischen Vorgängen, wie Koagulation und dgl.

Als Metallsalze eignen sich besonders gut Kupfer-, Silberoder Quecksilbersalze, und als Reduktionsmittel wird vorzugsweise Ascorbin- oder Citronensäure verwendet.

Ferner betrifft die Erfindung eine Vorrichtung nach dem Oberbegriff des Anspruchs 5. Aus der DE 30 35 877 A1 ist eine Vorrichtung dieser Art bekannt, die jedoch nicht zur Durchführung des erfindungsgemäßen Verfahrens geeignet ist. Um sie dafür geeignet zu machen, werden die kennzeichnenden Merkmale des Anspruchs 5 vorgeschlagen. Auf diese Weise lassen sich die hohen vor dem Spalt auftretenden Drücke besonders gut bewältigen und Feineinstellungen der Spaltbreite ermöglichen.

Vorzugsweise ist eine druckfeste, elastische, zu einem Druckfiltrationsgerät und wahlweise zu einem Flüssigkeitsvorratsgefäß führende Abführungsleitung vorgesehen, die über Dreiwegehähne mit dem Auffanggefäß und/oder dem Pressenzylinder in Verbindung gebracht werden kann. Dadurch kann der Preßsaft nach Beendigung der Preßvorgänge entweder unter Druck filtriert oder wahlweise in ein Flüssigkeitsvorratsgefäß abgeleitet werden.

Als zweckmäßig hat sich dabei erwiesen, wenn der Kanal mit einer scharfen spitzwinkligen Kante in den Pressenzylinder mündet. Auch an dem dem Zylinder zugewandten Ende des Stempels kann eine scharfe, in diesem Fall jedoch stumpfwinklige Kante vorgesehen werden. Die Länge des von der Wandung des Kanals und der Mantelfläche des Stempels gebildeten in sich geschlossenen, vorzugsweise ringförmi-gen Spaltes kann in Preßbrichtung vorzugsweise einige Millimeter betragen.

In vorteilhafter Weiterbildung der Erfindung mündet der Kanal einerseits in eine zum Auffanggefäß führende Verbindungsleitung und andererseits in eine der Zuführung von Verdünnungsmittel, z.B. der erwähnten Pufferlösung und dgl., dienende verschließbare Zuleitung. Die Zuleitung wird vor dem Beginn der Preßvorgänge geöffnet, bis die zu pressenden Pflanzen vollständig unter Flüssigkeit stehen, während Luft oder Schutzgas aus dem Zylinder nach oben verdrängt wird. Sodann wird bei geschlossener Zuleitung der Pressenstempel unter dem Flüssigkeitsspiegel in den Pressenzylinder eingeführt und zunächst wieder ein Teil des Verdünnungsmittels in ein Flüssigkeitsvorratsgefäß gedrückt, bevor Pflanzenmaterial durch den auf etwa 1/4 mm Weite eingestellten Spalt gepreßt wird. Anschließend wird das gesamte im Zylinder befindliche Pflanzenmaterial durch den Spalt in die Verbindungsleitung und das Auffanggefäß gepreßt. Beim anschließenden Rückhub des Pressenkolbens wird das gesamte durchgepreßte und nun genügend verflüssigte Material wieder in den Zylinder zurückgesaugt. Das in der Verbindungsleitung verbleibende Pflanzenmaterial kann mit Verdünnungslösung aus dem Vorratsbehälter in den Pressenzylinder zurückgespült werden. Gewöhnlich ist nach dem ersten Preßgang die Verbindungsleitung verstopft. Nach Öffnen des Spaltes auf 1 mm Weite wird über die Zuleitung Verdünnungsmittel in den Pressenzylinder gesaugt. Nach Schließen der Zuleitung wird mit dieser Flüssigkeit das Pflanzenmaterial aus der Verbindungsleitung in das Auffanggefäß gepreßt. Anschließend wiederholt sich der Preßvorgang bei verringerter Spaltbreite, wobei gewöhnlich die Verbindungsleitung nicht mehr verstopft und daher nicht freigepreßt werden muß. Das Preßgut wird von Pressung zu Pressung homogener und dünnflüssiger.

Der Verschluß der Zuleitung erfolgt vorzugsweise durch ein Ventil direkt an der Kanalwandung, wobei der Ventilstößel an der Spitze einer Stange sitzt, die von außen betätigbar ist. Bei dieser Ausbildung wird vermieden, daß die auftretenden hohen Preßdrücke das Ventil beschädigen oder daß dieses zugesetzt wird.

Vorzugsweise bestehen fast alle mit dem Preßgut in Berührung kommenden Bauteile aus Edelstahl, was sowohl die nötige Festigkeit als auch chemische Beständigkeit ergibt. Die Ausführung des Zylinders des Auffanggefäßes in Glas hat den Vorteil, daß das Preßgut auf Restgasfreiheit kontrolliert werden kann.

Obwohl bei dem erfindungsgemäßen Verfahren im Vergleich zu bekannten Zerkleinerungs- und Preßmethoden nur verhältnismäßig geringe Temperaturen anfallen, die in der Größenordnung von 20 bis 30°C liegen, wird vorzugsweise diese Temperatur durch einen den Zylinder umgebenden Kühlmantel noch weiter abgesenkt. Dieser besteht zweckmäßigerweise aus im Pressenzylinder angeordneten Kühlkanälen zum Durchleiten von Kühlmittel. Außerdem kann in unmittelbarer Nachbarschaft des Auslaßkanals, wo also die relativ höchsten Temperaturen anfallen, ein Temperaturfühler angeordnet werden, um die Temperatur zu überwachen, damit keine Schädigung des Preßsaftes durch zu hohe Temperaturen eintritt.

Der Luftabschluß im Auffanggefäß wird bei einer weiteren vorteilhaften Ausgestaltung der Erfindung durch einen gegen die Innenwand des Auffanggefäßes abgedichteten Abschlußkolben gewährleistet, der durch das in das Auffanggefäß gepreßte Preßgut angehoben und durch Sog wieder abgesenkt wird.

Das Auffanggefäß ist zweckmäßigerweise um eine horizontale Achse drehbar und in jedem Winkel bis 90°, d.h. also bis zur Querstellung, fixierbar. An der bei Schrägstellung höchstgelegenen Stelle des Abschluß kolbens kann vorteilhafterweise eine verschließbare Öffnung mit einem konischen Ventilsitz vorgesehen werden, der mit einem konischen, von außen betätigbaren Ventilstößel zusammenwirkt. Dies hat den Vorteil, daß eventuell hier sich noch sammelnde restliche Gasblasen über die verschließbare Öffnung abgelassen werden können.

An die Abführungsleitung kann vorteilhafterweise direkt ein mit Mikrofiltern belegbares und sterilisierbares Druckfiltrationsgerät angeschlossen werden, über das ein keimfreier Preßsaft abgedrückt werden kann. Der auf den Filtern verbleibende Preßkuchen kann mit Verdünnungsflüssigkeit, mit der auch die gesamte Apparatur nachgespült werden kann, gewaschen und mit Druckgas fast trocken gepreßt werden.

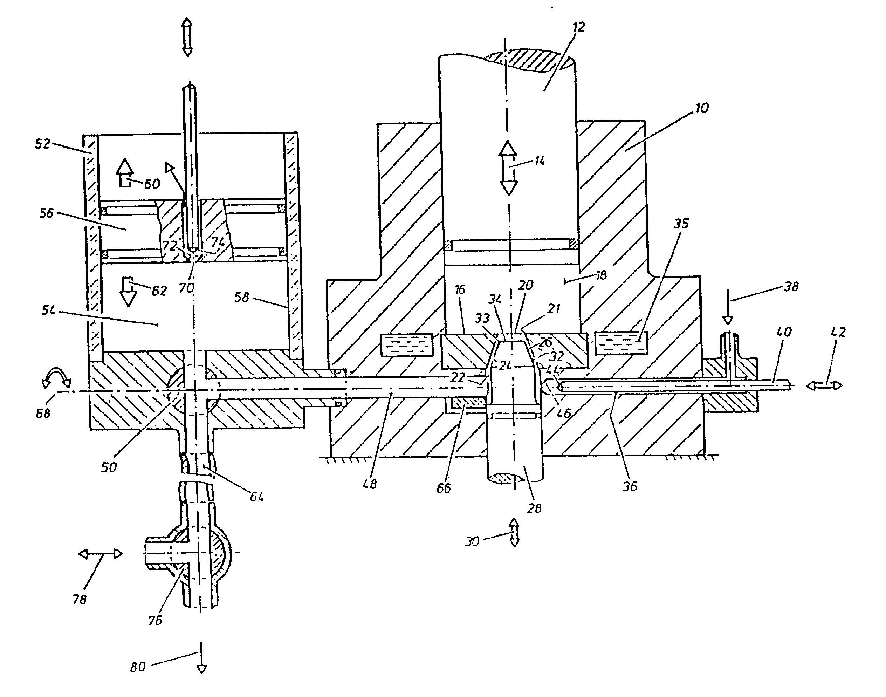

Anhand der Figur, die einen Schnitt durch die wesentlichen Teile der Vorrichtung zeigt, wird ein bevorzugtes Ausführungsbeispiel der erfindungsgemäßen Vorrichtung näher erläutert.

Der aus Edelstahl hergestellt Pressenzylinder 10, in welchem ein Pressenkolben 12 im Sinne des Doppelpfeils 14 auf- und abwärts bewegbar ist, weist in der Mitte des Bodens 16 des Zylinderraums 18 eine kreisförmige Auslaßöffnung 20 auf, die nach unten in einen Auslaßkanal 22 übergeht, dessen Wandung 24 sich konisch erweitert. Die Auslaßöffnung 20 wird von einem scharfkantigen und spitzwinkligen Übergang des Bodens 16 in den sich erweiternden Auslaßkanal 22 gebildet. Mit der Kanalwandung 24 wirkt eine Mantelfläche 26 gleicher Konizität zusammen, die am oberen Ende eines Stempels 28 ausgebildet ist. Der Stempel 28 kann längs des Doppelpfeils 30 nach oben und unten verschoben werden, so daß die Breite des zwischen Wandung 24 und Mantel 26 gebildeten konischen Ringspaltes 32 von einigen Millimetern Länge variabel eingestellt werden kann. Wenn sich der Stempel 28 in seiner nicht dargestellten oberen Endstellung befindet, schließt seine ebene Stirnfläche 34 bündig mit dem Boden 16 des Zylinderraums 18 ab und der Ringspalt 32 besitzt die Breite Null. Durch Absenken des Stempels 28 nach unten kann die Spaltbreite beliebig vergrößert werden. Die Mantelfläche 26 geht ebenfalls in einer scharfen, jedoch stumpfwinkligen Kante 33 in die ebene Stirnfläche 34 über.

In der Wandung des Zylinders 10 sind Kühlkanäle 35 zum Umwälzen eines Kühlmittels vorgesehen, die hauptsächlich nahe dem unteren Ende des Zylinders angeordnet sind, da dort die relativ höchsten Temperaturen auftreten.

Der Kanal 22 mündet auf der in der Figur rechts gelegenen Seite in eine Zuleitung 36 für Verdünnungsflüssigkeit, die gemäß dem Pfeil 38 aus einem nicht gezeigten Vorratsbehälter in die Zuleitung 36 eingespeist werden kann. Innerhalb der Zuleitung 36 ist eine mit ihrem rechten Ende nach außen geführte Stange 40 angeordnet, die im Sinne des Doppelpfeils 42 hin- und herbewegt werden kann. An dem nahe dem Kanal 22 gelegenen Ende weist die Stange 40 einen konischen Ventilstößel 44 auf, der mit einem unmittelbar an die Kanalwandung 24 anschließenden konischen Ventilsitz 46 zusammenwirkt, so daß bei Verschiebung der Stange 40 nach links das Ventil 44, 46 geschlossen und bei Verschiebung der Stange 40 nach rechts das Ventil geöffnet wird.

Ferner steht der Auslaßkanal 22 über eine Verbindungsleitung 48 und einen Dreiwegehahn 50 mit einem oben offenen Auffanggefäß 52 in Verbindung. Die Verbindungsleitung 48 mündet von unten in den Auffangraum 54 des Auffanggefäßes 52. Der Auffangraum 54 ist nach oben durch einen frei verschiebbaren Abschlußkolben 56 abgeschlossen, der gegen die Innenwandung 58 des Auffanggefäßes 52 abgedichtet ist. Er wird durch das durch die Verbindungsleitung 48 und den Dreiwegehahn 50 zugeführte Preßgut gemäß dem Pfeil 60 nach oben angehoben und sinkt durch Sog gemäß dem Pfeil 62 wieder nach unten.

Während eines Preßvorgangs wird der Pressenkolben 12 abgesenkt und das Pflanzenmaterial mit der Verdünnungsflüssigkeit restlos durch den Ringspalt 32 in die Verbindungsleitung 48 und den Auffangraum 54 gepreßt. Das Dreiwegeventil 50 ist dabei so eingestellt, daß der Durchgang von der Verbindungsleitung 48 zum Auffangraum 54 frei ist, während der Weg durch eine nach unten führende Abführungsleitung 64 verschlossen ist. Falls die Verbindungsleitung 48 nach dem ersten Preßvorgang verstopft ist, kann nach Öffnen des Spaltes auf 1 mm Weite Verdünnungsmittel über die Zuleitung 36 in den Pressenzylinder 10 gesaugt werden. Nach Schließen der Zuleitung 36 wird mit dieser Flüssigkeit das Pflanzenmaterial aus der Verbindungsleitung 48 in das Auffanggefäß 52 gepreßt. Anschließend wird der Pressenkolben 12 wieder angehoben, wodurch der gesamte ungenügend verflüssigte Pflanzenbrei aus dem Auffangraum 54 in den Zylinderraum 18 zurückgesaugt und der Rest, der in der Verbindungsleitung bleibt, mit Verdünnungsflüssigkeit von der Abführungsleitung 64 aus nachgespült wird. Der Ringspalt 32 wird daraufhin durch Anheben des Stempels 28 verkleinert und der Preßvorgang wiederholt. Nach dem zweiten Preßvorgang kann gewöhnlich nach Öffnen des Ringspaltes in den Zylinderraum zurückgesaugt und nachgespült werden. Verstopfungen treten dann nicht mehr auf. Diese Preßvorgänge werden bei schrittweise verkleinerter Spaltbreite so lange fortgesetzt, bis die gewünschte Zerkleinerung erreicht ist. Sodann wird die im Auffanggefäß 52 oder im Pressenzylinder 18 befindliche flüssige Frischpflanzenverreibung direkt in ein Durckfiltrationsgerät gedrückt, indem durch Verdrehen der Dreiwegehähne 50 und 76 die geeigneten Verbindungen hergestellt werden.

Nahe dem Kanal 22 ist im Zylinder 10 ein Temperaturfühler 66 angeordnet, der in nicht näher gezeigter Weise elektrisch mit einer Temperaturmeßvorrichtung zur Überwachung der Preßtemperatur verbunden ist.

Das Auffanggefäß 52 ist in nicht näher gezeigter Weise um die mit der Achse der Verbindungsleitung 48 zusammenfallende horizontale Achse 68 drehbar gelagert. Die Drehung ist zwischen der dargestellten aufrechten Position des Auffanggefäßes 52 und einer um 90° dagegen verdrehten waagrechten Position möglich. In jedem Zwischenwinkel kann die Lage des Auffanggefäßes 52 fixiert werden. Nahe dem Rand des Abschlußkolbens 56 weist dieser eine verschließbare Öffnung 70 auf, die einen konischen Ventilsitz 72 enthält. Der Ventilsitz 72 wirkt mit einem von außen betätigbaren konischen Ventilstößel 74 zusammen. Die Öffnung 70 ist im Abschlußkolben 56 so seitlich angeordnet, daß sie sich bei Schrägstellung des Auffanggefäßes 52 um die Achse 68 an der höchstgelegenen Stelle des Abschlußkolbens 56 befindet. Auf diese Weise können eventuell sich hier noch sammelnde restliche Gasblasen über die Öffnung 70 abgelassen werden. Da das Auffanggefäß 52 vorzugsweise aus Glas besteht, ist die Ansammlung von Gasblasen ohne weiteres zu beobachten.

An den Dreiwegehahn 50 schließt sich nach unten eine druckfeste, elastische Abführungsleitung 64 an, die in einem weiteren Dreiwegehahn 76 endet. Der Dreiwege hahn 76 ist einerseits mit einem nicht gezeigten und durch den Pfeil 78 symbolisierten Flüssigkeitsvorratsgefäß und andererseits mit einem ebenfalls nicht gezeigten durch den Pfeil 80 symbolisierten Druckfiltrationsgerät verbunden. Je nach Stellung des Dreiwegehahns 76 kann der jeweils unterschiedlich vorbehandelte Preßsaft entweder in das Flüssigkeitsvorratsgefäß 78 abgeleitet oder durch das Druckfiltrationsgerät 80 gefiltert werden.

**Ansprüche**

1. Verfahren zur Herstellung von Preßsaft aus Pflanzen, wobei die Pflanzen gepreßt werden und dieser Preßvorgang mehrfach wiederholt wird, wobei stets Preßgut eines Preßvorgang verwendet wird, dadurch gekennzeichnet, daß zur Herstellung einer Frischpflanzenverreibung in Flüssigkeit die Pflanzen bei jedem Preßvorgang unter Luftabschluß und unter Flüssigkeit restlos durch einen schmalen Spalt gepreßt werden, daß die Spaltbreite von Preßvorgang zu Preßvorgang schrittweise verkleinert wird und daß nach dem letzten Preßvorgang der Preßsaft über ein angeschlossenes Druckfiltrationsgerät abgepreßt wird.

2. Verfahren nach Anspruch 1, dadurch gekennzeichnet, daß als Flüssigkeit eine als Verdünnungsmittel dienende Pufferlösung verwendet wird, die dem Milieu des menschlichen Flüssigkeitshaushalts mit einem pH-Wert von etwa 7,35 und einer Osmolalität von etwa 290 mOsm entspricht.

3. Verfahren nach Anspruch 2, dadurch gekennzeichnet, daß vor oder während des Preßverfahrens dem Preßgut oder dem Verdünnungsmittel ein Metallsalz in flüssiger Lösung und unabhängig davon zum Ausfällen des elementaren Metalls innerhalb des Preßgutes ein Reduktionsmittel beigefügt werden.

4. Verfahren nach Anspruch 3, dadurch gekennzeichnet, daß als Metallsalz ein Kupfer-, Silber- oder Quecksilbersalz verwendet wird.

5. Vorrichtung mit einem Pressenzylinder (10) und einem in verschiebbaren Pressenkolben (12), wobei der Zylinder (10) einen mit einem Auffanggefäß (52) in Verbindung stehenden Auslaß für das Preßgut aufweist, der Auslaß als Kanal (22) ausgebildet ist, und im Kanals (22) ein Stempel (28) parallel zur Mittelachse des Kanals (22) beweglich gelagert ist, dadurch gekennzeichnet, daß die Vorrichtung zur Durchführung des Verfahrens nach einem der vorangehenden Ansprüche dient, wobei die Wandung (24) des Kanal (22) sich in Auspreßrichtung erweitert und wobei der Stempel (28) den Kanal (22) vollständig verschließt, wenn die Stirnfläche (34) des Stempels (28) mit dem Boden des Pressenzylinders (16) in einer Ebene liegt.

6. Vorrichtung nach Anspruch 5, dadurch gekennzeichnet, daß die Wandung (24) des Kanals (22) konisch ausgebildet ist.

7. Vorrichtung nach Anspruch 5 oder 6, dadurch gekennzeichnet, daß die Mantelfläche (26) des Stempels (28) konisch und parallel zur Wandung (24) des Kanals (22) oder ballig ausgebildet ist.

8. Vorrichtung nach einem der Ansprüche 5 bis 7, dadurch gekennzeichnet, daß der Kanal (22) mit einer scharfen spitzwinkligen Kante (21) in den Boden (16) des Zylinderraums (18) des Pressenzylinders (10) mündet.

9. Vorrichtung nach einem der Ansprüche 5 bis 8, dadurch gekennzeichnet, daß der Kanal (22) einerseits in eine zum Auffanggefäß (52) führende Verbindungsleitung (48) und andererseits in eine zur Zuführung von Verdünnungsmittel dienende verschließbare Zuleitung (36) mündet.

10. Vorrichtung nach Anspruch 9, dadurch gekennzeichnet, daß in der Zuleitung (36) unmittelbar an die Kanalwandung (24) anschließend ein konischer Ventilsitz (46) vorgesehen ist, der mit einem konischen Ventilstößel (44) zusammenwirkt, welcher an einem Ende einer in der Zuleitung (36) angeordneten und von außen betätigbaren Stange (40) sitzt.

11. Vorrichtung nach einem der Ansprüche 5 bis 10, dadurch gekennzeichnet, daß im Pressenzylinder (10) Kühlkanäle (35) zum Durchleiten von Kühlmittel vorgesehen sind.

12. Vorrichtung nach einem der Ansprüche 5 bis 11, dadurch gekennzeichnet, daß im Auffanggefäß (52) ein gegen die Innenwand (58) des Auffanggefäßes (52) abgedichteter Abschlußkolben (56) durch Druck oder Sog des Preßgutes aufwärts bzw. abwärts verschiebbar ist.

13. Vorrichtung nach einem der Ansprüche 5 bis 12, dadurch gekennzeichnet, daß das Auffanggefäß (52) um eine horizontale Achse (68) drehbar und in jedem Winkel bis 90° fixierbar ist.

14. Vorrichtung nach einem der Ansprüche 5 bis 13, dadurch gekennzeichnet, daß an der bei Schrägstellung höchstgelegenen Stelle des Abschlußkolbens (56) des Auffanggefäßes (52) eine verschließbare Öffnung (70) mit einem konischen Ventilsitz (72) vorgesehen ist, der mit einem konischen, von außen betätigbaren Ventilstößel (74) zusammenwirkt.

**Claims**

1. A process for the production of pressed juice from plants, wherein the plants are pressed and this pressing operation is repeated several times, wherein the pressed goods from one pressing operation are always used as starting material for the next pressing operation, characterized in that for the production of a fresh preparation of comminuted plant material in liquid, in each pressing operation the plant material is pressed under liquid through a narrow slot, with the exclusion of air and leaving no remainder, the slot width is decreased stepwise from pressing operation to pressing operation, and after the last pressing operation the pressed juice is separated by forcing it through an attached pressure filtration device.

2. A process according to claim 1, characterized in that the liquid used to act as a dilution medium is a buffer solution which corresponds to the medium involved in human body fluid balance having a pH value of about 7.35 and an osmolarity of about 290 mOsm.

3. A process according to claim 2, characterized in that before or during the pressing operation a metal salt in liquid solution is added to the goods to be pressed or to the dilution medium, and independently of this a reducing agent is added to precipitate the elementary metal within the material being pressed.

4. A process according to claim 3, characterized in that a copper, silver or mercury salt is used as the metal salt.

5. A device comprising a press cylinder (10) and a press piston (12) which is displaceable in the former, wherein the cylinder (10) comprises an outlet for the pressed goods which is connected to a collecting vessel (52), the outlet is formed as a channel (22) and a plunger (28) parallel to the middle axis of the channel (22) is movably housed in the channel (22), characterized in that the device serves to perform the process claimed in any one of the preceding claims, where the wall (24) of the channel (22) opens out in the direction of pressing and where the plunger (28) completely shuts off the channel (22) when the end face (34) of the plunger (28) lies in the same plane as the bottom (16) of the press cylinder.

6. A device as claimed in claim 5, characterized in that the wall (24) of the channel (22) has a conical shape.

7. A device as claimed in claim 5 or claim 6, characterized in that the outer surface (26) of the plunger (28) has a conical shape parallel to the wall (24) of the channel (22) or is spherical.

8. A device as claimed in any one of claims 5 to 7, characterized in that the channel (22) opens with a sharp acute angled edge (21) in the bottom (16) of the cylinder housing (18) of the press cylinder (10).

9. A device as claimed in any one of claims 5 to 8, characterized in that the channel (22) opens at one side into a connecting channel (48) leading to the collecting vessel (52) and at the other side into a closable inlet channel (36) which serves for the supply of dilution medium.

10. A device as claimed in claim 9, characterized in that a conical valve seat (46) is provided in the inlet channel (36) directly adjacent to the channel wall (24), which cooperates with a conical valve plunger (44) which is situated at one end of a rod (40) which can be actuated externally and is located in the inlet channel (36).

11. A device as claimed in any one of claims 5 to 10, characterized in that cooling channels (35) are provided in the press cylinder (10) for cooling means to pass through.

12. A device as claimed in any one of claims 5 to 11, characterized in that a sealing piston (56) which forms a seal against the inner wall (58) of the collecting vessel (52) can be pushed up or down inside the collecting vessel (52) by pressure or suction caused by the pressed material.

13. A device as claimed in any one of claims 5 to 12, characterized in that the collecting vessel (52) can be rotated about a horizontal axis (68) and can be fixed at any angle up to 90°.

14. A device as claimed in any one of claims 5 to 13, characterized in that, at the highest position of the sealing piston (56) of the collecting vessel (52) when in the inclined position, a closable opening (70) comprising a conical valve seat (72) is provided which cooperates with a conical valve plunger (74) which can be actuated externally.

## Revendications

1. Procédé de production d'un jus de pression de plantes, les plantes étant pressées et ce processus de pression étant répété à plusieurs reprises, la matière pressée qui résulte d'un cycle de pression étant utilisée pour le cycle de pression suivant, caractérisé en ce que, pour la production d'une trituration de plantes fraîches dans un liquide, les plantes sont pressées complètement à travers une fente étroite à l'abri de l'air et sous le liquide dans chaque cycle de pression, en ce que la largeur de la fente est réduite progressivement d'un cycle de pression à l'autre, et en ce que le jus de pression est extrait par pression à travers un appareil filtre-presse après le dernier cycle de pression.

2. Procédé suivant la revendication 1, caractérisé en ce qu'on utilise comme liquide une solution tampon servant d'agent de dilution qui est conforme au milieu du fluide biologique humain, avec un pH d'env. 7,35 et une osmolalité d'env. 290 mOsm.

3. Procédé suivant la revendication 2, caractérisé en ce qu'on ajoute, avant ou pendant le processus de pression, à la matière à presser ou à l'agent de dilution un sel métallique en solution liquide, et indépendemment de celui-ci un agent réducteur pour précipiter le métal élémentaire à l'intérieur de la matière à presser.

4. Prodédé suivant la revendication 3, caractérisé en ce qu'un sel de cuivre, d'argent ou de mercure est utilisé à titre de sel métallique.

5. Dispositif comportant un cylindre de presse (10) et un piston de presse (12) coulissant dans ce dernier, le cylindre (10) étant muni d'une sortie pour la matière pressée communiquant avec un récipient de réception (52), la sortie étant en forme de conduit (22), et un plongeur (28) étant logé de façon mobile dans le conduit (22) parallèlement à l'axe médian du conduit (22), caractérisé en ce que le dispositif sert à la mise en oeuvre du procédé suivant l'une quelconque des revendications précédentes, la paroi (24) du conduit (22) s'évasant dans la direction d'éjection, et le plongeur (28) obturant complètement le conduit (22) lorsque la face frontale (34) du plongeur (28) se trouve sur un plan commun avec le fond du cylindre de presse (16).

6. Dispositif suivant la revendication 5, caractérisé en ce que la paroi (24) du conduit (22) est de forme conique.

7. Dispositif suivant les revendications 5 ou 6, caractérisé en ce que la surface-enveloppe (26) du plongeur (28) est de forme conique et parallèle à la paroi (24) du conduit (22) ou de forme bombée.

8. Dispositif suivant l'une quelconque des revendications 5 à 7, caractérisé en ce que le conduit (22) débouche dans le fond (16) de la chambre cylindrique (18) du cylindre de presse (10) avec une arête (21) vive à angle aigu.

9. Dispositif suivant l'une quelconque des revendications 5 à 8, caractérisé en ce que le conduit (22) débouche d'une part dans une conduite de connexion (48) aboutissant au récipient de réception (52), et d'autre part dans une conduite d'amenée (36) obturable servant à l'admission de l'agent de dilution.

10. Dispositif suivant la revendication 9, caractérisé en ce que la conduite d'amenée (36) est pourvue d'un siège de soupape (46) conique immédiatement adjacent à la paroi (24) du conduit et concourant avec un poussoir de soupape (44) placé à une extrémité d'une tige (40) disposée dans la conduite d'amenée (36) et actionnée de l'extérieur.

11. Dispositif suivant l'une quelconque des revendications 5 à 10, caractérisé en ce que des canaux de refroidissement (35) sont disposés dans le cylindre de presse (10) pour y faire passer un fluide de refroidissement.

12. Dispositif suivant l'une quelconque des revendications 5 à 11, caractérisé en ce que dans le récipient de réception (52) un piston de fermeture (56) étanché contre la paroi intérieure (58) du récipient de réception (52) peut être déplacé respectivement vers le haut ou vers le bas par la pression ou la dépression de la matière pressée.

13. Dispositif suivant l'une quelconque des revendications 5 à 12, caractérisé en ce que le récipient de réception (52) est mobile autour d'un axe horizontal (68) et peut être fixé à une position angulaire quelconque allant jusqu'à 90°.

14. Dispositif suivant l'une quelconque des revendications 5 à 13, caractérisé en ce qu'une ouverture (70) pourvue d'un siège de soupape (72) conique concourant avec un poussoir de soupape (74) conique actionné de l'extérieur est disposé au point le plus élevé du piston de fermeture (56) du récipient de réception (52) en position oblique.